# FASCICULE DE BREVET EUROPEEN

(11) **EP 3 366 069 B1**
(45) Date de publication et mention de la délivrance du brevet: **09.10.2019**
(21) Numéro de dépôt: 16809923.2
(22) Date de dépôt: 21.10.2016
(51) Int. Cl.: H04W 76/15, H04W 60/00, H04W 84/04, H04L 29/12, H04W 88/16

(54) **PASSERELLE RÉSIDENTIELLE HYBRIDE**
HYBRIDER RESIDENTIAL GATEWAY
HYBRID RESIDENTIAL GATEWAY

(30) Priorité: 22.10.2015 FR 1560096
(43) Date de publication de la demande: 29.08.2018
(73) Titulaire: Orange, 75015 Paris (FR)
(72) Inventeur: LEMOINE, Benoît, 22300 Ploubezre (FR); CLOAREC, Jean-Yves, 22300 Lannion (FR); MOAL, Gurvan, 22300 Tredrez Locquemeau (FR)
(86) Numéro de dépôt international: PCT/FR2016/052742
(87) Numéro de publication internationale: WO 2017/068302

(56) Documents cités:
- US-A1- 2010 080 172
- US-A1- 2014 355 536
- "Updates to the WID about NBIFOM in order to support the Hybrid access of a RGW", 3GPP DRAFT; S2-142628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 2 juillet 2014 (2014-07-02), XP050837059, Extrait de l'Internet: URL:http://www.3gpp.org/ftp/tsg_sa/WG2_Arc h/TSGS2_104_Dublin/Docs/ [extrait le 2014-07-02]

## Description

### 1. Domaine de l'invention

La demande d'invention se situe dans le domaine des connexions entre un terminal cellulaire et un réseau de commutation par paquets, le terminal cellulaire pouvant être par exemple un smartphone ou une passerelle résidentielle hybride, fixe et mobile.

### 2. Etat de la technique antérieure

Face à l'explosion des débits consommés par les terminaux connectés aux réseaux locaux ou résidentiels, et l'insuffisance de bande passante des liens fixes, notamment xDSL ou FTTH, entre les passerelles résidentielles et le réseau d'accès large bande, une solution a été d'ajouter à certaines passerelles, dites hybrides, la possibilité de se connecter par un lien radio au réseau d'accès mobile. En d'autres termes, ces passerelles hybrides possèdent une fonctionnalité de terminal mobile leur permettant de s'attacher à une station de base du réseau de collecte mobile. Lorsque le débit requis par les terminaux du réseau local desservi par la passerelle résidentielle excède la capacité de son lien fixe avec le réseau d'accès large bande, une telle passerelle hybride redirige une partie de son trafic sur son lien radio.

Les passerelles résidentielles hybrides selon la technique antérieure présentent l'inconvénient de surcharger les liens radio des stations de base environnantes ainsi que le réseau de collecte mobile.

US2010080172 A1 divulgue une méthode permettant de garder la même adresse IP entre un terminal mobile et une passerelle d'ancrage, pour deux connexions passant par deux stations de base distinctes. US2014355536 A1 divulgue la conjonction d'un terminal mobile, d'une station de base et d'une passerelle domestique en une seule structure dite hybride.

Un des buts de l'invention est de remédier à ces inconvénients de l'état de la technique.

### 3. Exposé de l'invention

L'invention est définie par les revendications.

L'invention vient améliorer la situation à l'aide d'un procédé de délégation d'une requête d'établissement d'une nouvelle connexion entre un terminal adapté pour se connecter à un réseau cellulaire, dit terminal cellulaire, et une passerelle dite d'ancrage comprenant une interface avec un réseau de commutation par paquets, le terminal cellulaire étant attaché par un premier lien à une station de base locale, une première connexion étant établie entre le terminal cellulaire et la passerelle d'ancrage, une adresse IP étant attribuée au terminal cellulaire par la passerelle d'ancrage, la première connexion utilisant l'adresse IP et le premier lien, le procédé étant mis en oeuvre dans la station de base locale et comprenant les étapes suivantes :
- obtention de mesures de qualité d'un signal radio émis par au moins une station de base voisine vers le terminal cellulaire,
- réception d'une requête d'établissement d'une nouvelle connexion entre le terminal cellulaire et la passerelle d'ancrage, générée par la passerelle d'ancrage et comprenant une indication de ressources nécessaires,
- décision de ne pas établir la nouvelle connexion au travers de la station de base locale, sur la base de l'indication de ressources nécessaires,
le procédé comprenant en outre les étapes suivantes :
- sélection d'une station de base voisine en fonction des mesures de qualité obtenues,
- émission d'un message de configuration à destination du terminal cellulaire comprenant un identifiant de la station de base voisine sélectionnée, le message de configuration demandant l'attachement du terminal cellulaire à la station de base voisine sélectionnée, par un deuxième lien, l'attachement déclenchant la création de la nouvelle connexion entre le terminal cellulaire et la passerelle d'ancrage au travers de la station de base voisine sélectionnée, la nouvelle connexion utilisant l'adresse IP et le deuxième lien, la première connexion et le premier lien étant maintenus.

Si pour un motif quelconque, il n'est pas possible à la station de base locale de supporter une nouvelle connexion entre le terminal cellulaire et la passerelle d'ancrage tout en gardant intacte la connexion existante, grâce à l'invention cette nouvelle connexion est établie au travers d'une station de base voisine, et ce sans qu'une nouvelle adresse IP ne soit attribuée au terminal cellulaire par la passerelle d'ancrage. Selon la technique antérieure, au contraire, lorsqu'un terminal cellulaire attaché à une station de base locale demande à s'attacher à une station de base voisine, la nouvelle connexion ne peut pas partager la même adresse IP avec la précédente connexion.

De plus, grâce à l'invention les ressources du réseau cellulaire sont mieux utilisées car la charge en débit d'un terminal cellulaire est répartie sur plusieurs stations de base.

Aussi, il est plus avantageux de garder la même adresse IP pour un même terminal cellulaire utilisant simultanément des liens différents vers plusieurs stations de base, car ainsi la répartition des flux n'a pas d'impact sur le réseau IP, et donc ne génère pas de signalisation additionnelle entre le terminal et les hôtes IP. Des implémentations pour un tel partage d'une adresse IP ont été présentées au 3GPP par exemple dans le document TR 36.932.

Selon un aspect de l'invention, le procédé de délégation comprend en outre une étape d'émission d'un message de réponse comprenant une information relative à la délégation de l'établissement de la nouvelle connexion à une station de base voisine.

Grâce à cet aspect, l'équipement de gestion ayant émis le message de requête d'établissement peut se mettre en attente d'une sollicitation non pas de la station de base locale mais d'une autre station de base. Avantageusement, le message de réponse peut comprendre un identifiant de cette autre station de base, et avantageusement, l'identifiant est celui de la station de base voisine sélectionnée.

Selon un aspect de l'invention, le procédé de délégation comprend en outre une étape de réception d'un message de réponse en provenance du terminal cellulaire confirmant l'établissement de la nouvelle connexion au travers de la station de base voisine sélectionnée.

Grâce à cet aspect, l'équipement de gestion ayant émis le message de requête d'établissement peut recevoir la réponse attendue de la part de la station de base locale, même si ce n'est pas au travers de cette station de base que la nouvelle connexion est établie, et ainsi avertir la passerelle d'ancrage pour que l'établissement de la nouvelle connexion se fasse dans les deux sens de transmission.

Selon un aspect de l'invention, l'étape de décision comprend une étape de comparaison d'un débit nécessaire à la nouvelle connexion avec un débit disponible au travers de la station de base locale, l'indication de ressources nécessaires, comprise dans la requête d'établissement d'une nouvelle connexion, comprenant une information relative au débit nécessaire.

Le motif de la décision peut être une insuffisance de débit disponible au travers de la station de base locale pour supporter le trafic de la nouvelle connexion, en plus de celui de la connexion existante. Grâce à l'information de débit nécessaire à la nouvelle connexion, la station de base locale peut décider entre établir la nouvelle connexion selon la technique antérieure, si son débit disponible le permet, ou de ne pas le faire, ce qui déclenche l'établissement de la nouvelle connexion au travers d'une station de base voisine.

Selon un aspect de l'invention, le message de configuration comprend l'indication de ressources nécessaires.

Grâce à cet aspect, le terminal cellulaire peut informer la station de base voisine du débit nécessaire à la nouvelle connexion, ce qui permet à celle-ci de vérifier si elle dispose elle-même de ce débit.

Selon un aspect de l'invention, le premier lien est un lien radio émulé sur un branchement physique entre le terminal cellulaire et la station de base locale.

Grâce à cet aspect, le terminal cellulaire et la station de base locale peuvent être intégrés dans un même équipement. Le branchement physique entre le terminal cellulaire et la station de base locale est par exemple une connexion métallique ou optique. Le débit disponible pour une nouvelle connexion n'est donc plus limité par la capacité d'un lien radio classique. Le débit disponible pour une nouvelle connexion sera en fait limité par la capacité du lien entre la station de base locale et le réseau d'accès desservant le réseau cellulaire, qui est en général inférieure à celle d'un branchement métallique ou optique, mais supérieure à celle d'un lien radio classique, non émulé.

Cet avantage est multiplié lorsqu'il existe une pluralité de stations de base voisines configurées de cette façon, c'est-à-dire chacune ayant leur terminal cellulaire connecté par un lien radio émulé sur un branchement physique. Ainsi, chacun de ces terminaux cellulaires peut compter sur une station de base voisine pour écouler une partie de son trafic lorsque sa station de base (locale) a atteint sa limite en débit, sans avoir à établir de nouvelle connexion IP avec sa passerelle d'ancrage.

Selon un aspect de l'invention, la station de base locale est connectée à un réseau d'accès fixe large-bande.

Grâce à cet aspect, les ressources du réseau cellulaire, déjà mieux utilisées grâce à l'invention, sont augmentées car la bande passante, par utilisateur, du réseau d'accès fixe large-bande est supérieure à celle, par utilisateur, des réseaux cellulaires. De ce fait, le réseau de collecte mobile peut être soulagé d'une partie du trafic passant par le réseau d'accès fixe.

Selon un aspect de l'invention, le terminal cellulaire est apte à se connecter à des équipements terminaux formant un réseau d'accès local, les équipements du réseau d'accès local étant aptes à échanger des paquets de données avec des équipements du réseau de commutation par paquets, au travers du premier lien et du deuxième lien.

Grâce à cet aspect, l'ensemble formé par le terminal cellulaire et la station de base locale possède une fonction de passerelle résidentielle, c'est-à-dire qu'il permet, par des connexions Ethernet ou Wi-Fi, la connexion d'équipements terminaux tels que par exemple un ordinateur, une tablette, et une imprimante, à la fois entre eux et avec le réseau de commutation par paquets, qui est par exemple l'Internet.

Une telle passerelle résidentielle, constituée d'un terminal cellulaire et d'une station de base locale selon l'invention, présente l'avantage de mieux utiliser les ressources du réseau d'accès en bande passante vers les stations de base.

Cet avantage est multiplié dans un réseau d'accès où les passerelles résidentielles de ce type sont suffisamment nombreuses et rapprochées, telles que dans une zone urbaine, car n'importe quelle passerelle résidentielle de ce type peut se connecter à une autre du même type et utiliser au moins une partie de sa bande passante disponible vers le réseau d'accès, permettant ainsi une meilleure répartition de la charge totale d'un terminal cellulaire sur plusieurs passerelles résidentielles.

Les différents aspects du procédé de délégation qui viennent d'être décrits peuvent être mis en oeuvre indépendamment les uns des autres ou en combinaison les uns avec les autres.

Un autre aspect ne faisant pas partie des revendications qui définissent l'invention, concerne aussi un procédé de traitement d'une requête déléguée d'établissement d'une nouvelle connexion entre un terminal adapté pour se connecter à un réseau cellulaire, dit terminal cellulaire, et une passerelle dite d'ancrage comprenant une interface avec un réseau de commutation par paquets, le terminal cellulaire étant attaché par un premier lien à une station de base locale, une première connexion étant établie entre le terminal cellulaire et la passerelle d'ancrage, une adresse IP étant attribuée au terminal cellulaire par la passerelle d'ancrage, la première connexion utilisant l'adresse IP et le premier lien, le procédé étant mis en oeuvre dans le terminal cellulaire et comprenant les étapes suivantes :
- émission à destination de la station de base locale de mesures de qualité d'un signal radio émis par au moins une station de base voisine vers le terminal cellulaire,
- réception d'un message de configuration comprenant un identifiant d'une des au moins une station de base voisine, le message de configuration demandant l'attachement du terminal cellulaire à la station de base voisine, par un deuxième lien, l'attachement déclenchant la création de la nouvelle connexion entre le terminal cellulaire et la passerelle d'ancrage au travers de la station de base voisine, la nouvelle connexion utilisant l'adresse IP et le deuxième lien, la première connexion et le premier lien étant maintenus,
- émission à destination de la station de base locale d'un message de réponse comprenant une information relative à l'établissement de la nouvelle connexion au travers de la station de base voisine, comprenant l'identifiant de la station de base voisine.

Un tel procédé permet à un terminal cellulaire de s'attacher à deux stations de base, à l'initiative de l'une des deux stations de base.

L'invention concerne encore une station de base locale apte à déléguer une requête d'établissement d'une nouvelle connexion entre un terminal adapté pour se connecter à un réseau cellulaire, dit terminal cellulaire, et une passerelle dite d'ancrage comprenant une interface avec un réseau de commutation par paquets, le terminal cellulaire étant attachée par un premier lien à la station de base locale, une première connexion étant établie entre le terminal cellulaire et la passerelle d'ancrage, une adresse IP étant attribuée au terminal cellulaire par la passerelle d'ancrage, la première connexion utilisant l'adresse IP et le premier lien, la station de base locale comprenant un récepteur, un processeur et un émetteur :
- le récepteur étant apte à obtenir des mesures de qualité d'un signal radio émis par au moins une station de base voisine vers le terminal cellulaire,
- et apte à recevoir une requête d'établissement d'une nouvelle connexion entre le terminal cellulaire et la passerelle d'ancrage, générée par la passerelle d'ancrage et comprenant une indication de ressources nécessaires,
- le processeur étant apte à décider de ne pas établir la nouvelle connexion au travers du dispositif, sur la base de l'indication de ressources nécessaires,
- et apte à sélectionner une station de base voisine en fonction des mesures de qualité obtenues,
- l'émetteur étant apte à émettre un message de configuration à destination du terminal cellulaire comprenant un identifiant de la station de base voisine sélectionnée, le message de configuration demandant l'attachement du terminal cellulaire à la station de base voisine sélectionnée, par un deuxième lien, l'attachement déclenchant la création de la nouvelle connexion entre le terminal cellulaire et la passerelle d'ancrage au travers de la station de base voisine sélectionnée, la nouvelle connexion utilisant l'adresse IP et le deuxième lien, la première connexion et le premier lien étant maintenus.

Cette station de base locale selon l'invention est apte à mettre en oeuvre dans tous ses modes de réalisation le procédé de délégation d'une requête d'établissement d'une nouvelle connexion, qui vient d'être décrit.

Un autre aspect ne faisant pas partie des revendications qui définissent l'invention, concerne également un terminal cellulaire adapté pour se connecter à un réseau cellulaire et apte à traiter une requête déléguée d'établissement d'une nouvelle connexion entre le terminal cellulaire et une passerelle dite d'ancrage comprenant une interface avec un réseau de commutation par paquets, le terminal cellulaire étant attaché par un premier lien à une station de base locale, une première connexion étant établie entre le terminal cellulaire et la passerelle d'ancrage, une adresse IP étant attribuée au terminal cellulaire par la passerelle d'ancrage, la première connexion utilisant l'adresse IP et le premier lien, le terminal cellulaire comprenant un émetteur et un récepteur :
- l'émetteur étant apte à émettre à destination de la station de base locale de mesures de qualité d'un signal radio émis par au moins une station de base voisine vers le terminal cellulaire,
- le récepteur étant apte à recevoir un message de configuration comprenant un identifiant d'une des au moins une station de base voisine, le message de configuration demandant l'attachement du terminal cellulaire à la station de base voisine, par un deuxième lien, l'attachement déclenchant la création de la nouvelle connexion entre le terminal cellulaire et la passerelle d'ancrage au travers de la station de base voisine, la nouvelle connexion utilisant l'adresse IP et le deuxième lien, la première connexion et le premier lien étant maintenus,
- l'émetteur étant apte à émettre à destination de la station de base locale d'un message de réponse comprenant une information relative à l'établissement de la nouvelle connexion au travers de la station de base voisine, comprenant l'identifiant de la station de base voisine.

Ce terminal cellulaire selon l'invention est apte à mettre en oeuvre dans tous ses modes de réalisation le procédé de traitement d'une requête déléguée d'établissement d'une nouvelle connexion, qui vient d'être décrit.

L'invention concerne en outre une passerelle résidentielle hybride comprenant une station de base locale telle que celle qui vient d'être décrite, et un terminal cellulaire tel que celui qui vient d'être décrit, le terminal cellulaire étant attaché à la station de base locale par un lien radioélectrique émulé sur un branchement physique, la station de base locale étant connectée à un réseau d'accès fixe large-bande.

Lorsque le terminal cellulaire selon l'invention et la station de base locale selon l'invention sont réunis en un seul appareil connecté au réseau d'accès large bande, cet appareil peut être non seulement être utilisé comme une passerelle résidentielle mais comme une passerelle résidentielle bénéficiant en plus de la connexion à une station de base du voisinage.

On comprend qu'il est très avantageux de déployer dans une même zone résidentielle une pluralité de passerelles résidentielles hybride selon l'invention. En effet, du point de vue de l'abonné, client ou usager qui utilise une telle passerelle hybride, il garde toutes les fonctionnalités d'une passerelle résidentielle classique, sauf que son débit effectivement disponible est supérieur au débit disponible sur sa seule passerelle hybride. Le trafic engendré par une nouvelle connexion, que la passerelle hybride de l'abonné ne peut pas écouler, peut donc passer par une passerelle hybride voisine. Les ressources radio des stations de base classiques dans la même zone de couverture sont donc préservées.

Le débit de la connexion au réseau d'accès large bande de la passerelle hybride voisine étant disponible, le débit total disponible pour l'abonné peut ainsi être doublé.

Selon un aspect de la passerelle résidentielle hybride selon l'invention, le terminal cellulaire est apte à se connecter à des équipements terminaux formant un réseau d'accès local, les équipements du réseau d'accès local étant aptes à échanger des paquets de données avec des équipements du réseau de commutation par paquets, au travers des premier et deuxième liens.

Cette passerelle résidentielle hybride selon l'invention permet à n'importe quel équipement client qui lui est connecté d'augmenter son débit disponible, voire de le doubler.

Selon un aspect de la passerelle résidentielle hybride selon l'invention, la station de base locale est de type femtocellule.

Grâce à cet aspect, il est aisé d'intégrer la station de base dans une passerelle résidentielle. En effet, les femtocellules, connues sous l'appellation HNodeB ou HeNodeB dans la terminologie 3GPP, sont conçues spécialement pour couvrir une zone réduite et requièrent peu de puissance par rapport à une cellule classique (NodeB ou eNodeB dans la terminologie 3GPP), à laquelle elle est complémentaire.

On comprend que grâce à ses caractéristiques l'invention fournit également une solution d'urgence à un abonné en cas de d'interruption de sa connexion au réseau d'accès fixe large-bande, car il peut accessoirement utiliser l'interface cellulaire de sa passerelle hybride vers une station de base classique pour passer un appel vocal ou ouvrir une session Internet.

L'invention concerne aussi un programme d'ordinateur comprenant des instructions pour la mise en oeuvre des étapes du procédé de délégation qui vient d'être décrit, lorsque ce procédé est exécuté par un processeur.

Un autre aspect ne faisant pas partie des revendications qui définissent l'invention, concerne un programme d'ordinateur comprenant des instructions pour la mise en oeuvre des étapes du procédé de traitement qui vient d'être décrit, lorsque ce procédé est exécuté par un processeur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Un autre aspect ne faisant pas partie des revendications qui définissent l'invention, vise aussi un support d'informations lisible par un ordinateur, et comportant des instructions de programme d'ordinateur tel que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- les figures 1a, 1b, 1c, 1d présentent de façon schématique une vue d'ensemble des éléments mettant en oeuvre l'invention, selon quatre modes particuliers de réalisation,
- la figure 2 présente un exemple de mise en oeuvre du procédé de délégation d'une requête d'établissement d'une nouvelle connexion, et du procédé de traitement de la requête déléguée, selon un aspect de l'invention,

- la figure 3 présente un exemple de structure d'une station de base locale, selon un aspect de l'invention,
- la figure 4 présente un exemple de structure d'un terminal cellulaire, selon un aspect de l'invention.

### 5. Description détaillée d'au moins un mode de réalisation de l'invention

Dans la suite de la description, on présente des exemples de plusieurs modes de réalisation de l'invention se basant sur la norme 3GPP TS 23.401 version 13.4.0, elle-même basée sur plusieurs normes dont la norme 3GPP TS 36.331, mais l'invention s'applique également aux évolutions de ces normes.

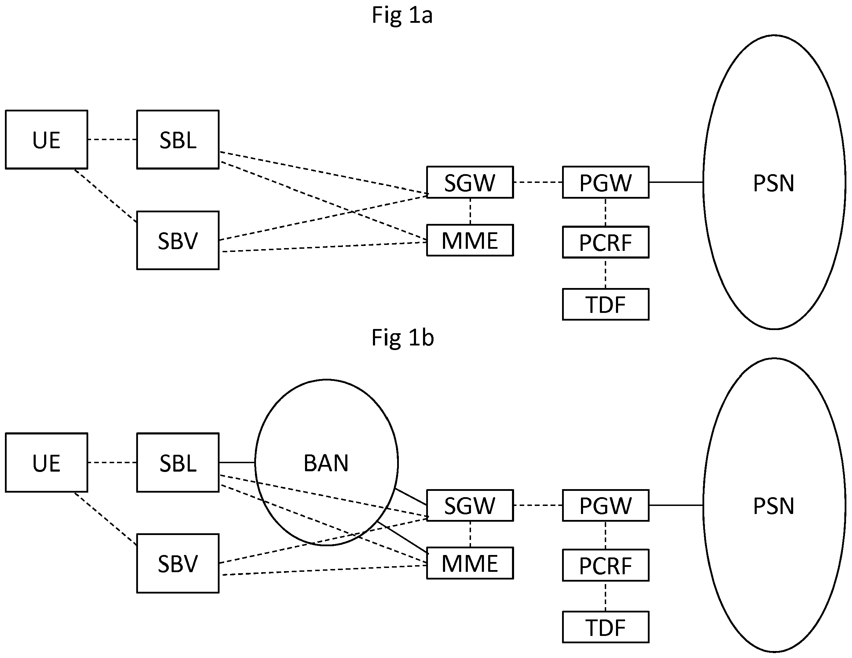

La **figure 1a** présente de façon schématique une vue d'ensemble des éléments mettant en oeuvre l'invention, selon un premier mode de réalisation.

Le terminal UE a établi une connexion avec une passerelle d'ancrage PGW au travers d'une station de base locale SBL à laquelle elle est attachée par un lien radioélectrique, et éventuellement d'une ou plusieurs passerelles de service SGW. Cette connexion permet au terminal UE d'échanger des données avec au moins un terminal distant du réseau de commutation par paquets PSN auquel la passerelle d'ancrage est connectée, par exemple le réseau Internet. Ce terminal distant peut être un serveur SIP, un terminal VoIP, un serveur VoD, etc, dans ce cas on appellera élément AF (Application Function) ce terminal distant. On notera qu'un élément TDF (Traffic Détection Function) peut être disposé à l'intérieur du réseau PSN entre la passerelle d'ancrage PGW et les éléments AFs, afin de permettre la détection de flux de communication particuliers entre le terminal UE et les éléments AFs.

Selon l'invention, le terminal UE s'attache aussi à une autre station de base SBV, sélectionnée parmi une pluralité de stations de base voisines de la station SBL, afin d'établir une nouvelle connexion avec la passerelle PGW. Les stations SBL et SBV sont connectées de façon classique aux divers éléments constitutifs d'un réseau mobile LTE/EPC, tel que la passerelle de service SGW, et un serveur de gestion de mobilité MME. La passerelle d'ancrage PGW, aussi de manière classique, est connectée à un élément de gestion PCRF dont le rôle est de gérer et appliquer les politiques de gestion, par l'opérateur du réseau LTE/EPC, des connexions de terminaux mobiles, cet élément PCRF étant connecté à un élément TDF ou à un élément AF. Ainsi, lorsque l'élément TDF ou l'élément AF identifient qu'un flux de donnée nécessite une bande passante et/ou une qualité de service spécifique à travers le réseau mobile, ils peuvent demander la mise en oeuvre d'une nouvelle connexion en parallèle de la première afin de transporter ce flux de données avec une politique de gestion de bande passante et/ou de qualité de service particulière.

Non seulement la connexion initiale via la station SBL est maintenue lorsque la nouvelle connexion via la station SBV est établie, mais l'adresse IP attribuée à la connexion initiale par la passerelle PGW est réutilisée pour cette nouvelle connexion.

La **figure 1b** présente de façon schématique une vue d'ensemble des éléments mettant en oeuvre l'invention, selon un deuxième mode de réalisation.

Dans un deuxième mode de réalisation, la station de base locale SBL est connectée à un réseau d'accès fixe large bande, noté BAN et géré par le même opérateur que le réseau LTE/EPC, ou par un autre opérateur. La station SBL peut ainsi être un élément terminal du réseau d'accès fixe large bande xDSL ou FTTH, et être localisée dans les locaux d'un client de cet opérateur, et gérée par le client. Une telle station de base, appelée HNodeB ou HeNodeB, est par exemple destinée à desservir une cellule de petite taille, dite femtocellule, complétant la couverture imparfaite d'une cellule de plus grande taille, dite macrocellule. Une macrocellule est desservie par une station de base appelée NodeB ou eNodeB, qui est gérée directement par l'opérateur du réseau LTE/EPC.

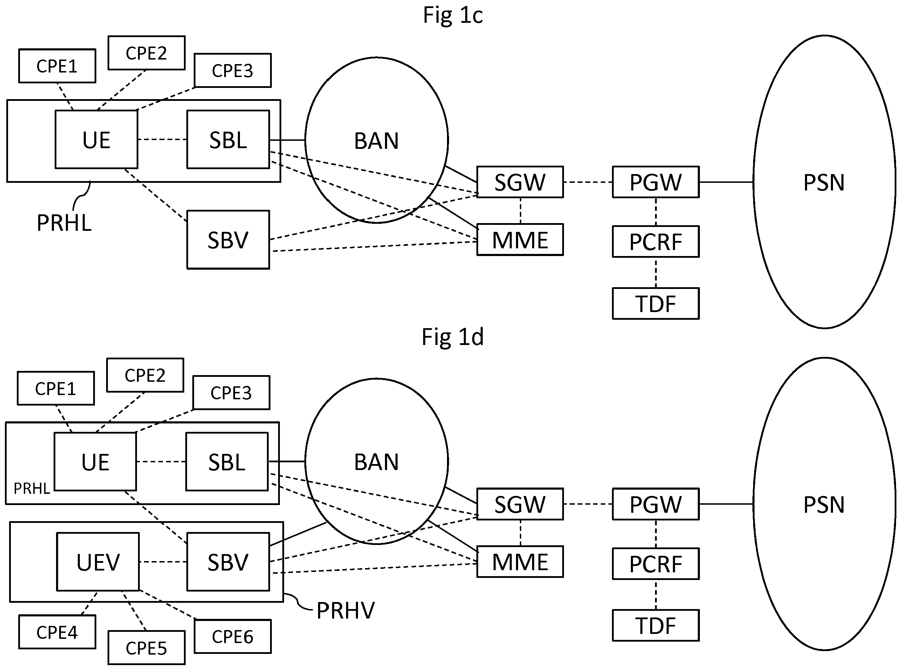

La **figure 1c** présente de façon schématique une vue d'ensemble des éléments mettant en oeuvre l'invention, selon un troisième mode de réalisation.

Dans un troisième mode de réalisation, la station SBL est un élément terminal du réseau d'accès fixe large bande xDSL ou FTTH, et est localisée dans les locaux d'un client de cet opérateur, et est gérée par le client, comme dans le mode précédent. Par contre, dans ce troisième mode, la station SBL est intégrée avec le terminal UE pour former une seule et même passerelle résidentielle PRHL dite hybride, c'est-à-dire une passerelle résidentielle capable de connecter son réseau local au réseau de commutation par paquets PSN, par un accès fixe et par un accès cellulaire. Dans ce mode, le réseau d'accès local de la passerelle résidentielle PRHL est déployé par le terminal UE, qui comprend une ou plusieurs interfaces, par exemple de type Ethernet ou Wi-Fi, permettant à des équipements du client, notés CPE1, CPE2 et CPE3, tels que par exemple une tablette ou une imprimante, de se connecter au terminal UE.

Comme dans ce mode le terminal UE est fixe et interne par rapport à la station SBL, le lien radioélectrique entre eux peut être émulé sur un branchement physique entre les éléments constituant la passerelle résidentielle hybride PRHL, ce qui présente les avantages d'une part de réserver les fréquences de ce lien pour un autre lien radioélectrique, et d'autre part d'augmenter la capacité du lien. Comme le lien radioélectrique est émulé, les éléments du réseau cellulaire tels que la passerelle d'ancrage PGW considèrent que le terminal UE est connecté selon les protocoles prévus pour le réseau cellulaire, et aucune modification n'est nécessaire dans ces éléments. Les fréquences radioélectriques n'étant pas utilisées pour le lien entre le terminal UE et la station SBL, elles peuvent l'être pour un lien radioélectrique entre le terminal UE et une station de base voisine, telle que SBV. Comme un seul lien radioélectrique à la fois est utilisé, aucun problème de partage et de coordination des fréquences ne se pose au terminal UE, même si du point de vue du réseau cellulaire le terminal UE est attaché à deux stations de base différentes par deux liens radioélectriques différents.

La **figure 1d** présente de façon schématique une vue d'ensemble des éléments mettant en oeuvre l'invention, selon un quatrième mode de réalisation.

Dans ce mode, non seulement la station SBL est comprise dans une passerelle résidentielle hybride PRHL selon l'invention, telle que celle qui vient d'être décrite, mais la station voisine SBV est également comprise dans une passerelle résidentielle hybride PRHV selon l'invention. Comme la passerelle résidentielle PRHL, la passerelle résidentielle PRHV comprend un terminal UEV apte à déployer un réseau local permettant à des équipements client CPE4, CPE5 et CPE6 de se connecter au terminal UEV, et le lien radioélectrique entre le terminal UEV et la station SBV est émulé sur un branchement physique.

Un opérateur provisionne son réseau d'accès de façon à écouler le trafic de ses abonnés (ou clients, ou usagers) dans la plupart des situations, le trafic de chaque abonné étant différent et irrégulier, avec, dans les deux sens montant ou descendant des pics de débit, des périodes à débit moyen plus faible mais plus régulier, et des périodes à trafic nul. Mais le risque est toujours présent qu'un pic de trafic chez plusieurs abonnés simultanément engendre une saturation du réseau d'accès fixe large bande, et cause une dégradation de la qualité de service.

On comprend que si un opérateur déploie un grand nombre de passerelles résidentielles hybrides PRHL et PRHV selon l'invention, le trafic de ses abonnés peut être mieux réparti, et le risque de saturation du réseau d'accès est diminué.

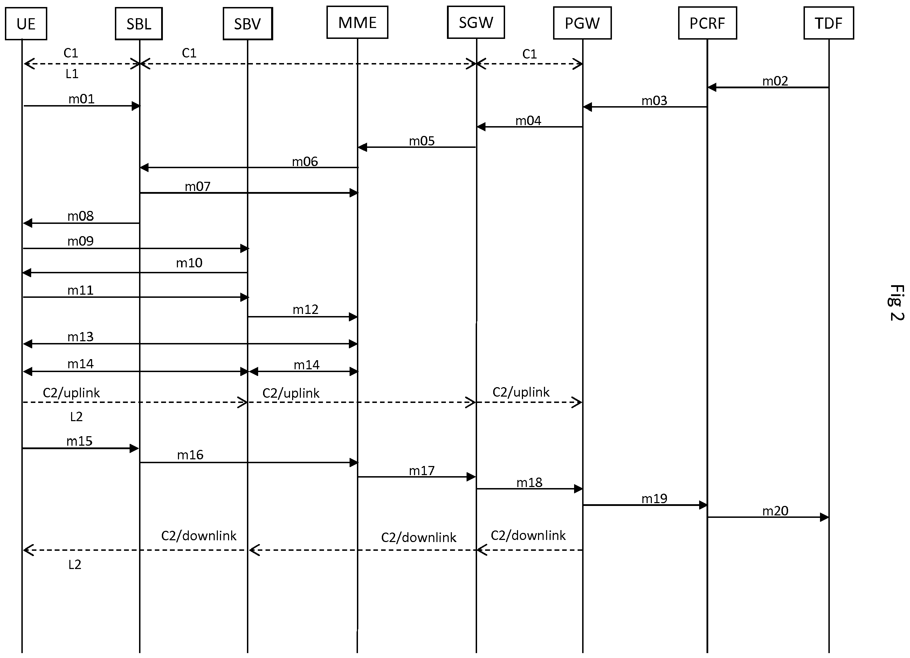

La **figure 2** présente un exemple de mise en oeuvre du procédé de délégation d'une requête d'établissement d'une nouvelle connexion, et du procédé de traitement de la requête déléguée selon un aspect de l'invention.

Par souci de clarté des explications et de simplicité de la figure, l'hypothèse non limitative est faite que la station de base locale SBL et la station de base voisine SBV dépendent toutes les deux de la même passerelle d'ancrage PGW, de la même passerelle de service SGW et du même serveur gestionnaire de mobilité MME.

Selon des procédures connues effectuées préalablement à l'exécution du procédé, le terminal cellulaire UE est attaché à la station SBL par un premier lien L1, une première connexion C1, connue dans le norme sous le nom de "Default EPS Bearer" dans le cas où le terminal UE est attaché à un "eNodeB" ou bien encore "Primary PDP Context" dans le cas où le terminal UE est attaché à un "NodeB", est établie entre le terminal UE et la passerelle PGW, et une adresse IP est attribuée au terminal UE par la passerelle PGW pour cette connexion C1. On se contentera par la suite de décrire les procédures relatives au "Default EPS Bearer", mais elles peuvent être transposées au "Primary PDP Context".

Le procédé de délégation d'une requête d'établissement d'une nouvelle connexion est mis en oeuvre par la station SBL, et le procédé de traitement de la requête déléguée est mis en oeuvre par le terminal UE.

De façon connue, le terminal UE émet à destination de la station SBL un ou plusieurs messages, notés m01, comprenant des mesures relatives à la qualité de signaux radio entre le terminal UE et une ou plusieurs stations de bases voisines de la station SBL ainsi que les identifiants des stations de bases voisines associés aux mesures.

Grâce à ces mesures m01, la station SBL est capable de sélectionner à tout moment la station de base voisine SBV, dont le signal radio reçu par le terminal UE est le meilleur.

Suite à un besoin correspondant à un service proposé par un élément AF ou à un flux détecté par l'élément TDF, la passerelle PGW reçoit via l'élément de gestion PCRF (message m02) dont elle dépend une requête "IP CAN Session Modification" m03 pour le terminal UE.

Sur la base de cette requête, qui indique les ressources nécessaires à ce service, telles que par exemple un besoin en bande passante et les caractéristiques des flux IP concernés, la passerelle d'ancrage PGW génère une requête d'établissement d'une nouvelle connexion "Create Bearer Request" m04, qui est relayée par la passerelle SGW (message m05), puis par le serveur MME (message m06).

Les caractéristiques des flux IP concernés par la demande sont spécifiés sous la forme d'une ou plusieurs descriptions TFT (Traffic Flow Template) décrivant l'adresse ou une plage d'adresses IP source et/ou destination, port ou plage de ports TCP/UDP source et/ou destination ainsi que champ DSCP des paquets IP transportés (on notera que tout ou partie de ces paramètres pourra être renseigné).

Cette requête d'établissement d'une nouvelle connexion est traduite par le serveur MME en une requête "Bearer Setup Request / Session Management Request" m06, destinée à établir une nouvelle connexion C2, désignée dans la norme sous le nom de "Dedicated EPS Bearer", qui est sous la dépendance du "Default EPS Bearer" préexistant. On notera que dans le cas d'un "Primary PDP Context" préexistant, c'est un "Secondary PDP Context" qui devra être établi. La requête m06 est émise à destination de la station SBL à laquelle le terminal UE est attaché par le lien L1.

La station SBL, ayant reçu la requête m06 lui demandant d'établir une nouvelle connexion C2 pour le terminal UE, décide ne pas l'établir, parce qu'elle ne dispose pas des ressources nécessaires indiquées, par exemple parce qu'elle ne dispose pas de la bande passante suffisante entre elle-même et le réseau de commutation par paquets PSN pour écouler le trafic généré par la nouvelle connexion C2, qui s'ajouterait au trafic généré par les connexions existantes, dont la connexion C1.

La station SBL émet alors, d'une part, une réponse "Bearer Setup Delegated" m07 au serveur MME avec l'indication que les ressources sont insuffisantes sur la station SBL pour traiter la demande du serveur MME et qu'elle a décidé de déléguer à une autre station SBV la prise en charge la demande, et d'autre part, une requête "Connection Reconfiguration" m08 à destination du terminal UE.

Selon la technique antérieure, la station SBL aurait émis une réponse "Bearer Setup Fail" au lieu d'une réponse "Bearer Setup Delegated". L'avantage de la réponse "Bearer Setup Delegated" est qu'elle permet au serveur MME de se mettre en attente d'une sollicitation de la part d'une station voisine à la station SBL. Cette réponse "Bearer Setup Delegated" n'est toutefois pas obligatoire, et dans une variante, elle peut ne pas être émise, sachant que le serveur MME reste en attente d'une réponse de la station SBL, qui vient de toute façon sous la forme du message m16 présenté plus bas.

Par la requête m08, il est demandé au terminal UE de s'attacher à la station SBV, préalablement sélectionnée par la station SBL, en vue d'établir la nouvelle connexion C2 au travers de la station SBV, tout en maintenant active la connexion C1, les deux connexions C1 et C2 partageant la même adresse IP.

Par exemple la requête m08 comprend les paramètres suivants:
- identifiant de la première connexion C1,
- identifiant de la station SBV,
- bande passante requise pour la nouvelle connexion.

En réaction au message m08, le terminal UE émet une requête "Connection Request" m09 vers la station SBV, destinée à établir un lien au niveau de la couche physique, par exemple un lien radioélectrique, avec la station SBV.

La station SBV répond au terminal UE par une réponse "Connexion Setup" m10, indiquant au terminal que le lien est établi.

Le terminal UE émet alors une requête d'attachement "Connection Setup Complete / Attach Request" m11 vers la station SBV, qui doit vérifier qu'elle dispose d'une bande passante suffisante vers le réseau de commutation par paquets PSN. A cet effet, le message m11 indique notamment la bande passante requise pour la nouvelle connexion. Si elle n'en dispose pas, la station SBV répond au message m11 par un message "Attach Reject" indiquant comme cause de rejet le manque de ressources pour satisfaire la demande de bande passante.

Ensuite, la station SBV doit vérifier que l'attachement est possible en émettant vers le serveur MME une requête "Attach Request" m12. A cet effet, le message m11 indique notamment l'identité du serveur MME avec lequel le terminal UE avait préalablement conversé pour établir la connexion initiale C1. Si la station SBV ne peut pas contacter le serveur MME désigné car il ne fait pas partie de la liste (MME pool) des serveurs MME qu'elle a le droit de contacter, la station SBV répond au message m11 par un message "Attach Reject" indiquant comme cause de rejet l'impossibilité de contacter le serveur MME.

S'ensuit un échange de messages m13 entre le serveur MME et le terminal UE, destiné à identifier et authentifier le terminal UE. Le serveur MME peut durant cet échange vérifier auprès d'un serveur d'autorisation HSS (Home Subscriber Server) si le "multihoming", c'est-à-dire la possibilité de s'attacher à plusieurs stations de base à la fois, est autorisé pour le terminal UE. Certaines parties de cet échange relatives strictement à l'identification et à l'authentification du terminal UE peuvent avoir déjà été réalisées lors de l'établissement la connexion C1, et sont optionnelles.

Si le "multihoming" n'est pas autorisé, alors le serveur MME doit envoyer un message d'erreur "Attach Reject" à la station SBV indiquant comme cause de rejet l'absence de permission d'établir une nouvelle connexion au travers de la station SBV pour le terminal UE. La station SBV doit alors relayer le message d'erreur "Attach Reject" au terminal UE.

Dans les trois cas de rejet, le terminal UE et la station SBV doivent alors interrompre leur lien de niveau de la couche physique. On supposera par la suite qu'aucune de ces causes de rejet ne s'est réalisée.

S'ensuit un échange de messages m14 entre le serveur MME et la station SBV, et entre la station SBV et le terminal UE. Cet échange m14 comprend des messages tels que, par exemple, un message "Attach Accept / Context Setup Request" du serveur MME à la station SBV, en réponse à la requête m12, une requête "Connection Reconfiguration Request" de la station SBV vers le terminal UE, à laquelle il répond par un message "Connection Reconfiguration Response", permettant ainsi à la station SBV de répondre au serveur MME par un message "Context Setup Response", puis par un message "Attach Complete".

A l'issue de cet échange m14, le terminal UE dispose des paramètres nécessaires à la nouvelle connexion C2, tels que :
- méthode et paramètres de chiffrage des données circulant dans la connexion C2 sur le segment entre le terminal UE et la station SBV,
- rappel des paramètres de la connexion C1 déjà établie entre le terminal UE et la passerelle d'ancrage PGW, comme par exemple l'identifiant de la connexion C1, ainsi que l'adresse IP allouée au terminal UE pour cette connexion C1,
- caractéristiques des flux IP à faire passer dans le sens montant dans la connexion C2, sous la forme d'une ou plusieurs descriptions TFT (Traffic Flow Template) décrivant l'adresse ou les plages d'adresses IP destination, port ou plage de ports TCP/UDP source et/ou destination ainsi que champ DSCP des paquets IP transportés (on notera que tout ou partie de ces paramètres pourra être renseigné).

Suite à l'échange m14, le terminal UE peut émettre des premières données sur la connexion C2 dans le sens montant, vers le réseau PSN. La connexion C2 est notée "C2/uplink" dans la figure. La connexion C2 étant associée à la connexion C1, les paquets IP émis par le terminal UE dans le sens montant de cette connexion C2 contiennent la même adresse IP source que ceux émis dans le sens montant de la connexion C1 déjà existante.

Suite à l'échange m14, le terminal UE émet à destination de la station SBL, en réponse à la requête m08, un message "Connection Reconfiguration Complete" m15. Ce message diffère de la norme en ce que le terminal UE informe la station SBL du bon établissement de la connexion C2 à travers la station SBV, dont il rappelle l'identifiant de station de base.

La station SBL émet ensuite à destination du serveur MME, en réponse à la requête m06, un message "Session Management Response" m16. Ce message diffère de la norme en ce que la station SBL informe le serveur MME que la station SBL a été mise au courant par le terminal UE du bon établissement de la connexion C2 à travers la station SBV, dont elle rappelle l'identifiant de station de base.

Ensuite, des réponses m17, m18, m19 et m20 sont faites en cascade respectivement aux requêtes m05, m04, m03 et m02, conformément la norme.

Suite à cette cascade de réponses, la passerelle d'ancrage PGW est correctement configurée pour aiguiller vers la connexion C2 dans le sens descendant les paquets IP éligibles à la connexion C2 et le terminal UE peut recevoir des premières données sur la connexion C2 dans le sens descendant, depuis le réseau PSN. La connexion C2 est notée "C2/downlink" dans la figure 2.

On notera que les caractéristiques des flux IP à faire passer dans le sens descendant dans la connexion C2, correspondent à une ou plusieurs descriptions TFT indiquées dans le message initial "IP CAN Session Modification" m03 en provenance du PCRF.

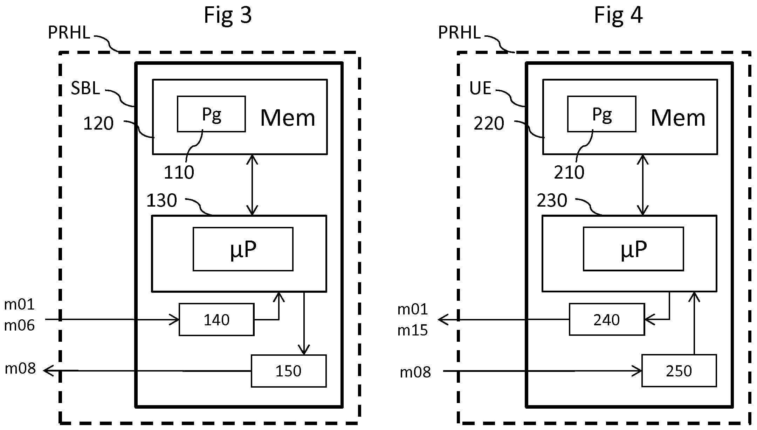

En relation avec la **figure 3****,** on présente maintenant un exemple de structure d'une station de base locale, selon un aspect de l'invention.

La station de base locale SBL met en oeuvre le procédé de délégation d'une requête d'établissement d'une nouvelle connexion, dont différents modes de réalisation viennent d'être décrits.

Une telle station SBL peut être mise en oeuvre dans une passerelle résidentielle hybride PRHL telle que celle présentée en relation avec les figures 1c et 1d.

Par exemple, la station SBL comprend une unité de traitement 130, équipée par exemple d'un microprocesseur µP, et pilotée par un programme d'ordinateur 110, stocké dans une mémoire 120 et mettant en oeuvre le procédé de délégation d'une requête d'établissement d'une nouvelle connexion selon l'invention. A l'initialisation, les instructions de code du programme d'ordinateur 110 sont par exemple chargées dans une mémoire RAM, avant d'être exécutées par le processeur de l'unité de traitement 130.

Une telle station SBL comprend également un récepteur 140, et un émetteur 150 :
- le récepteur 140 étant apte à obtenir des mesures de qualité m01 d'un signal radio émis par au moins une station de base voisine vers le terminal cellulaire,
- apte à recevoir une requête d'établissement m06 d'une nouvelle connexion entre le terminal cellulaire et la passerelle d'ancrage, générée par la passerelle d'ancrage et comprenant une indication de ressources nécessaires,
- et apte à recevoir un message de réponse m15 en provenance du terminal cellulaire confirmant l'établissement de la nouvelle connexion au travers d'une station de base voisine,
- le processeur 130 étant apte à décider de ne pas établir la nouvelle connexion au travers du dispositif, sur la base de l'indication de ressources nécessaires,
- et apte à sélectionner une station de base voisine en fonction des mesures de qualité obtenues,
- l'émetteur 150 étant apte à émettre un message de réponse m07 indiquant que l'établissement de la nouvelle connexion est délégué à la station de base voisine sélectionnée,
- et apte à émettre un message de configuration m08 à destination du terminal cellulaire comprenant un identifiant de la station de base voisine sélectionnée, le message de configuration demandant l'attachement du terminal cellulaire à la station de base voisine sélectionnée, par un deuxième lien, l'attachement déclenchant la création de la nouvelle connexion entre le terminal cellulaire et la passerelle d'ancrage au travers de la station de base voisine sélectionnée, la nouvelle connexion utilisant l'adresse IP et le deuxième lien, la première connexion et le premier lien étant maintenus.

En relation avec la **figure 4****,** on présente maintenant un exemple de structure d'un terminal cellulaire, selon un aspect de l'invention.

Le terminal cellulaire UE met en oeuvre le procédé de traitement de la requête déléguée d'établissement d'une nouvelle connexion, dont différents modes de réalisation viennent d'être décrits.

Un tel terminal UE peut être mis en oeuvre dans une passerelle résidentielle hybride PRHL telle que celle présentée en relation avec les figures 1c et 1d.

Par exemple, le terminal UE comprend une unité de traitement 230, équipée par exemple d'un microprocesseur µP, et pilotée par un programme d'ordinateur 210, stocké dans une mémoire 220 et mettant en oeuvre le procédé de traitement de la requête déléguée d'établissement d'une nouvelle connexion selon l'invention. A l'initialisation, les instructions de code du programme d'ordinateur 210 sont par exemple chargées dans une mémoire RAM, avant d'être exécutées par le processeur de l'unité de traitement 230.

Un tel terminal UE comprend également un émetteur 240, et un récepteur 250 :
- l'émetteur 240 étant apte à émettre à destination de la station de base locale de mesures de qualité (m01) d'un signal radio émis par au moins une station de base voisine vers le terminal cellulaire,
- le récepteur 250 étant apte à recevoir un message de configuration (m08) comprenant un identifiant d'une des au moins une station de base voisine, le message de configuration demandant l'attachement du terminal cellulaire à la station de base voisine, par un deuxième lien (L2), l'attachement déclenchant la création de la nouvelle connexion entre le terminal cellulaire et la passerelle d'ancrage au travers de la station de base voisine, la nouvelle connexion utilisant l'adresse IP et le deuxième lien, la première connexion et le premier lien étant maintenus,
- l'émetteur 240 étant apte à émettre à destination de la station de base locale d'un message de réponse (m15) comprenant une information relative à l'établissement de la nouvelle connexion au travers de la station de base voisine, comprenant l'identifiant de la station de base voisine.

La station de base locale SBL et le terminal cellulaire UE peuvent être mis en oeuvre dans une passerelle résidentielle hybride PRHL. Dans cette configuration certains éléments comme le processeur, le récepteur ou l'émetteur peuvent être communs.

## Revendications

1. **Procédé** de délégation d'une requête d'établissement d'une nouvelle connexion (C2) entre un terminal adapté pour se connecter à un réseau cellulaire, dit terminal cellulaire (UE), et une passerelle dite d'ancrage (PGW) comprenant une interface avec un réseau de commutation par paquets (PSN),
le terminal cellulaire étant attaché par un premier lien (L1) à une station de base locale (SBL),
une première connexion (C1) étant établie entre le terminal cellulaire et la passerelle d'ancrage, une adresse IP étant attribuée au terminal cellulaire par la passerelle d'ancrage,
la première connexion utilisant l'adresse IP et le premier lien,
le procédé étant mis en oeuvre dans la station de base locale et comprenant les étapes suivantes :
• obtention de mesures de qualité (m01) d'un signal radio émis par au moins une station de base voisine vers le terminal cellulaire,
• réception d'une requête d'établissement (m06) d'une nouvelle connexion (C2) entre le terminal cellulaire et la passerelle d'ancrage, générée par la passerelle d'ancrage et comprenant une indication de ressources nécessaires,
• décision de ne pas établir la nouvelle connexion au travers de la station de base locale, sur la base de l'indication de ressources nécessaires,
le procédé comprenant en outre les étapes suivantes :
• sélection d'une station de base voisine (SBV) en fonction des mesures de qualité obtenues,
• émission d'un message de configuration (m08) à destination du terminal cellulaire comprenant un identifiant de la station de base voisine sélectionnée, le message de configuration demandant l'attachement du terminal cellulaire à la station de base voisine sélectionnée, par un deuxième lien (L2), l'attachement déclenchant la création de la nouvelle connexion entre le terminal cellulaire et la passerelle d'ancrage au travers de la station de base voisine sélectionnée, la nouvelle connexion utilisant l'adresse IP et le deuxième lien, la première connexion et le premier lien étant maintenus.

2. **Procédé** de délégation selon la revendication 1, comprenant en outre une étape d'émission d'un message de réponse (m07) comprenant une information relative à la délégation de l'établissement de la nouvelle connexion (C2) à une station de base voisine.

3. **Procédé** de délégation selon l'une des revendications précédentes, comprenant en outre une étape de réception d'un message de réponse (m15) en provenance du terminal cellulaire (UE) confirmant l'établissement de la nouvelle connexion (C2) au travers de la station de base voisine sélectionnée (SBV).

4. **Procédé** de délégation selon l'une des revendications précédentes, où l'étape de décision comprend une étape de comparaison d'un débit nécessaire à la nouvelle connexion (C2) avec un débit disponible au travers de la station de base locale (SBL), l'indication de ressources nécessaires, comprise dans la requête d'établissement (m06) d'une nouvelle connexion, comprenant une information relative au débit nécessaire.

5. **Procédé** de délégation selon l'une des revendications précédentes, où le message de configuration (m08) comprend l'indication de ressources nécessaires.

6. **Procédé** de délégation selon l'une des revendications précédentes, où le premier lien (L1) est un lien radio émulé sur un branchement physique entre le terminal cellulaire (UE) et la station de base locale (SBL).

7. **Procédé** de délégation selon la revendication précédente, où la station de base locale (SBL) est connectée à un réseau d'accès fixe large-bande (BAN).

8. **Procédé** de délégation selon la revendication précédente, où le terminal cellulaire (UE) est apte à se connecter à des équipements terminaux (CPE1, CPE2, CPE3) formant un réseau d'accès local, les équipements du réseau d'accès local étant aptes à échanger des paquets de données avec des équipements du réseau de commutation par paquets (PSN), au travers du premier lien (L1) et du deuxième lien (L2).

9. **Station de base locale** apte à déléguer une requête d'établissement d'une nouvelle connexion entre un terminal adapté pour se connecter à un réseau cellulaire, dit terminal cellulaire, et une passerelle dite d'ancrage comprenant une interface avec un réseau de commutation par paquets,
le terminal cellulaire étant attachée par un premier lien à la station de base locale,
une première connexion étant établie entre le terminal cellulaire et la passerelle d'ancrage, une adresse IP étant attribuée au terminal cellulaire par la passerelle d'ancrage,
la première connexion utilisant l'adresse IP et le premier lien,
la station de base locale comprenant un récepteur (140), un processeur (130) et un émetteur (150):
• le récepteur étant apte à obtenir des mesures de qualité d'un signal radio émis par au moins une station de base voisine vers le terminal cellulaire,
• et apte à recevoir une requête d'établissement d'une nouvelle connexion entre le terminal cellulaire et la passerelle d'ancrage, générée par la passerelle d'ancrage et comprenant une indication de ressources nécessaires,
• le processeur étant apte à décider de ne pas établir la nouvelle connexion au travers du dispositif, sur la base de l'indication de ressources nécessaires,
• et apte à sélectionner une station de base voisine en fonction des mesures de qualité obtenues,
• l'émetteur étant apte à émettre un message de configuration à destination du terminal cellulaire comprenant un identifiant de la station de base voisine sélectionnée, le message de configuration demandant l'attachement du terminal cellulaire à la station de base voisine sélectionnée, par un deuxième lien, l'attachement déclenchant la création de la nouvelle connexion entre le terminal cellulaire et la passerelle d'ancrage au travers de la station de base voisine sélectionnée, la nouvelle connexion utilisant l'adresse IP et le deuxième lien, la première connexion et le premier lien étant maintenus.

10. **Passerelle résidentielle hybride** comprenant une station de base locale conforme à la revendication 9 et un terminal cellulaire adapté pour se connecter à un réseau cellulaire et apte à traiter une requête déléguée d'établissement d'une nouvelle connexion (C2) entre le terminal cellulaire (UE) et une passerelle dite d'ancrage (PGW) comprenant une interface avec un réseau de commutation par paquets (PSN),
le terminal cellulaire étant attaché par un premier lien (L1) à une station de base locale (SBL),
une première connexion (C1) étant établie entre le terminal cellulaire et la passerelle d'ancrage, une adresse IP étant attribuée au terminal cellulaire par la passerelle d'ancrage,
la première connexion utilisant l'adresse IP et le premier lien,
le terminal cellulaire comprenant un émetteur (240) et un récepteur (250) :
• l'émetteur étant apte à émettre à destination de la station de base locale de mesures de qualité (m01) d'un signal radio émis par au moins une station de base voisine vers le terminal cellulaire,
• le récepteur étant apte à recevoir un message de configuration (m08) comprenant un identifiant d'une des au moins une station de base voisine, le message de configuration demandant l'attachement du terminal cellulaire à la station de base voisine, par un deuxième lien (L2), l'attachement déclenchant la création de la nouvelle connexion entre le terminal cellulaire et la passerelle d'ancrage au travers de la station de base voisine, la nouvelle connexion utilisant l'adresse IP et le deuxième lien, la première connexion et le premier lien étant maintenus,
• l'émetteur étant apte à émettre à destination de la station de base locale d'un message de réponse (m15) comprenant une information relative à l'établissement de la nouvelle connexion au travers de la station de base voisine, comprenant l'identifiant de la station de base,
le terminal cellulaire étant attaché à la station de base locale par un lien radioélectrique émulé sur un branchement physique, la station de base locale étant connectée à un réseau d'accès fixe large-bande.

11. **Passerelle résidentielle hybride** selon la revendication 10, où le terminal cellulaire est apte à se connecter à des équipements terminaux formant un réseau d'accès local, les équipements du réseau d'accès local étant aptes à échanger des paquets de données avec des équipements du réseau de commutation par paquets, au travers des premier et deuxième liens.

12. **Passerelle résidentielle hybride** selon l'une des revendications 10 ou 11, où la station de base locale est de type femtocellule.

13. **Programme d'ordinateur, caractérisé en ce qu'**il comprend des instructions pour la mise en oeuvre des étapes du procédé de délégation selon la revendication 1, lorsque ce procédé est exécuté par un processeur de la station de base locale.

## Patentansprüche

1. Verfahren zur Delegation einer Anforderung einer Herstellung einer neuen Verbindung (C2) zwischen einem Endgerät, das dazu vorgesehen ist, sich an ein zellulares Netzwerk anzuschließen, zellulares Endgerät (UE) genannt, und einem so genannten Anker-Gateway (PGW), umfassend eine Schnittstelle mit einem Paketvermittlungsnetz (PSN),
wobei das zellulare Endgerät durch einen ersten Link (L1) mit einer lokalen Basisstation (SBL) verbunden ist,
wobei eine erste Verbindung (C1) zwischen dem zellularen Endgerät und dem Anker-Gateway hergestellt wird, wobei eine IP-Adresse dem zellularen Endgerät durch das Anker-Gateway zugeteilt wird,
wobei die erste Verbindung die IP-Adresse und den ersten Link verwendet,
wobei das Verfahren in der lokalen Basisstation eingesetzt wird und die folgenden Schritte umfasst:
* Erhalt von Qualitätsmessungen (m01) eines Funksignals, das von mindestens einer benachbarten Basisstation zu dem zellularen Endgerät gesandt wird,
* Empfang einer Anforderung einer Herstellung (m06) einer neuen Verbindung (C2) zwischen dem zellularen Endgerät und dem Anker-Gateway, die von dem Anker-Gateway generiert wird und eine Angabe von notwendigen Ressourcen umfasst,
* Entscheidung, keine neue Verbindung über die lokale Basisstation auf Basis der Angabe von notwendigen Ressourcen herzustellen,
wobei das Verfahren ferner die folgenden Schritte umfasst:
* Auswahl einer benachbarten Basisstation (SBC) in Abhängigkeit von den erhaltenen Qualitätsmessungen,
* Senden einer Konfigurationsnachricht (m08) in Richtung des zellularen Endgeräts, umfassend einen Identifikator der ausgewählten benachbarten Basisstation, wobei die Konfigurationsnachricht das Attachment des zellularen Endgeräts an die ausgewählte benachbarte Basisstation durch einen zweiten Link (L2) fordert, wobei das Attachment die Erzeugung einer neuen Verbindung zwischen dem zellularen Endgerät und dem Anker-Gateway über die ausgewählte benachbarte Basisstation auslöst, wobei die neue Verbindung die IP-Adresse und den zweiten Link verwendet, wobei die erste Verbindung und der erste Link beibehalten werden.

2. Delegationsverfahren nach Anspruch 1, ferner umfassend einen Schritt des Sendens einer Antwortnachricht (m07), umfassend eine Information zu der Delegation der Herstellung der neuen Verbindung (C2) an eine benachbarte Basisstation.

3. Delegationsverfahren nach einem der vorhergehenden Ansprüche, ferner umfassend einen Schritt des Empfangs einer Antwortnachricht (m15) von dem zellularen Endgerät (UE), die die Herstellung der neuen Verbindung (C2) über die ausgewählte benachbarte Basisstation (SBV) bestätigt.

4. Delegationsverfahren nach einem der vorhergehenden Ansprüche, bei dem der Entscheidungsschritt einen Schritt des Vergleichs einer notwendigen Durchgangsmenge für die neue Verbindung (C2) mit einer verfügbaren Durchgangsmenge über die lokale Basisstation (SBL) umfasst, wobei die Angabe von notwendigen Ressourcen, die in der Anforderung einer Herstellung (m06) einer neuen Verbindung enthalten ist, eine Information zu der notwendigen Durchgangsmenge umfasst.

5. Delegationsverfahren nach einem der vorhergehenden Ansprüche, bei dem die Konfigurationsnachricht (m08) die Angabe von notwendigen Ressourcen umfasst.

6. Delegationsverfahren nach einem der vorhergehenden Ansprüche, bei dem der erste Link (L1) ein auf einem physischen Anschluss zwischen dem zellularen Endgerät (UE) und der lokalen Basisstation (SBL) emulierter Funklink ist.

7. Delegationsverfahren nach dem vorhergehenden Anspruch, bei dem die lokale Basisstation (SBL) an das fixe Breitband-Zugangsnetz (BAN) angeschlossen ist.

8. Delegationsverfahren nach dem vorhergehenden Anspruch, bei dem das zellulare Endgerät (UE) geeignet ist, sich an Endausrüstungen (CPE1, CPE2, CPE3) anzuschließen, die ein lokales Zugangsnetzwerk bilden, wobei die Ausrüstungen des lokalen Zugangsnetzwerks geeignet sind, Datenpakete mit Ausrüstungen des Paketvermittlungsnetzes (PSN) über den ersten Link (L1) und den zweiten Link (L2) auszutauschen.

9. Lokale Basisstation, die geeignet ist, eine Anforderung einer Herstellung einer neuen Verbindung zwischen einem Endgerät, das dazu vorgesehen ist, sich an ein zellulares Netzwerk anzuschließen, zellulares Endgerät genannt, und einem so genannten Anker-Gateway, umfassend eine Schnittstelle mit einem Paketvermittlungsnetz, zu delegieren,
wobei das zellulare Endgerät durch einen ersten Link mit der lokalen Basisstation verbunden ist,
wobei eine erste Verbindung zwischen dem zellularen Endgerät und dem Anker-Gateway hergestellt wird, wobei eine IP-Adresse dem zellularen Endgerät durch das Anker-Gateway zugeteilt wird,
wobei die erste Verbindung die IP-Adresse und den ersten Link verwendet,
wobei die lokale Basisstation einen Empfänger (140), einen Prozessor (130) und einen Sender (150) umfasst:
* wobei der Empfänger geeignet ist, Qualitätsmessungen eines Funksignals, das von mindestens einer benachbarten Basisstation zu dem zellularen Endgerät gesandt wird, zu erhalten,
* und geeignet ist, eine Anforderung einer Herstellung einer neuen Verbindung zwischen dem zellularen Endgerät und dem Anker-Gateway, die von dem Anker-Gateway generiert wird und eine Angabe von notwendigen Ressourcen umfasst, zu empfangen,
* wobei der Prozessor geeignet ist zu entscheiden, keine neue Verbindung über die Vorrichtung auf Basis der Angabe von notwendigen Ressourcen herzustellen,
* und geeignet ist, eine benachbarte Basisstation in Abhängigkeit von den erhaltenen Qualitätsmessungen auszuwählen,
* wobei der Sender geeignet ist, eine Konfigurationsnachricht in Richtung des zellularen Endgeräts zu senden, umfassend einen Identifikator der ausgewählten benachbarten Basisstation, wobei die Konfigurationsnachricht das Attachment des zellularen Endgeräts an die ausgewählte benachbarte Basisstation durch einen zweiten Link fordert, wobei das Attachment die Erzeugung einer neuen Verbindung zwischen dem zellularen Endgerät und dem Anker-Gateway über die ausgewählte benachbarte Basisstation auslöst, wobei die neue Verbindung die IP-Adresse und den zweiten Link verwendet, wobei die erste Verbindung und der erste Link beibehalten werden.

10. Hybrides Residential-Gateway, umfassend eine lokale Basisstation nach Anspruch 9 und ein zellulares Endgerät, das dazu vorgesehen ist, sich an ein zellulares Netzwerk anzuschließen, und geeignet ist, eine delegierte Anforderung einer Herstellung einer neuen Verbindung (C2) zwischen dem zellularen Endgerät (UE) und einem so genannten Anker-Gateway (PGW), umfassend eine Schnittstelle mit einem Paketvermittlungsnetz (PSN), zu bearbeiten,
wobei das zellulare Endgerät durch einen ersten Link (L1) mit einer lokalen Basisstation (SBL) verbunden ist,
wobei eine erste Verbindung (C1) zwischen dem zellularen Endgerät und dem Anker-Gateway hergestellt wird, wobei eine IP-Adresse dem zellularen Endgerät durch das Anker-Gateway zugeteilt wird,
wobei die erste Verbindung die IP-Adresse und den ersten Link verwendet,
wobei das zellulare Endgerät einen Sender (240) und einen Empfänger (250) umfasst:
* wobei der Sender geeignet ist, in Richtung der lokalen Basisstation Qualitätsmessungen (m01) eines von mindestens einer benachbarten Basisstation zu dem zellularen Endgerät gesandten Funksignals zu senden,
* wobei der Empfänger geeignet ist, eine Konfigurationsnachricht (m08) zu empfangen, umfassend einen Identifikator der mindestens einen benachbarten Basisstation, wobei die Konfigurationsnachricht das Attachment des zellularen Endgeräts an die benachbarte Basisstation durch einen zweiten Link (L2) fordert, wobei das Attachment die Erzeugung der neuen Verbindung zwischen dem zellularen Endgerät und dem Anker-Gateway über die benachbarte Basisstation auslöst, wobei die neue Verbindung die IP-Adresse und den zweiten Link verwendet, wobei die erste Verbindung und der erste Link beibehalten werden,
* wobei der Sender geeignet ist, in Richtung der lokalen Basisstation eine Antwortnachricht (m15) zu senden, umfassend eine Information zur Herstellung der neuen Verbindung über die benachbarte Basisstation, umfassend den Identifikator der Basisstation,
wobei das zellulare Endgerät mit der lokalen Basisstation durch einen auf einem physischen Anschluss emulierten funkelektrischen Link verbunden ist, wobei die lokale Basisstation an ein fixes Breitband-Zugangsnetz angeschlossen ist.

11. Hybrides Residential-Gateway nach Anspruch 10, bei dem das zellulare Endgerät geeignet ist, sich an Endausrüstungen anzuschließen, die ein lokales Zugangsnetzwerk bilden, wobei die Ausrüstungen des lokalen Zugangsnetzwerks geeignet sind, Datenpakete mit Ausrüstungen des Paketvermittlungsnetztes über die ersten und zweiten Links auszutauschen.

12. Hybrides Residential-Gateway nach einem der Ansprüche 10 oder 11, bei dem die lokale Basisstation vom Typ Femtozelle ist.

13. Computerprogramm, **dadurch gekennzeichnet, dass** es Anweisungen für den Einsatz der Schritte des Delegationsverfahrens nach Anspruch 1 umfasst, wenn dieses Verfahren von einem Prozessor der lokalen Basisstation ausgeführt wird.

## Claims

1. **Method** for delegating a request to establish a new connection (C2) between a terminal adapted to connect to a cellular network, so-called cellular terminal (UE), and a so-called anchor gateway (PGW) comprising an interface with a packet switching network (PSN),
the cellular terminal being attached by a first link (L1) to a local base station (SBL),
a first connection (C1) being established between the cellular terminal and the anchor gateway, an IP address being allocated to the cellular terminal by the anchor gateway,
the first connection using the IP address and the first link,
the method being implemented in the local base station and comprising the following steps:
• obtaining of measurements of quality (m01) of a radio signal transmitted by at least one neighbor base station toward the cellular terminal,
• reception of a request for establishment (m06) of a new connection (C2) between the cellular terminal and the anchor gateway, generated by the anchor gateway and comprising an indication of necessary resources,
• decision not to establish the new connection through the local base station, on the basis of the indication of necessary resources,
the method furthermore comprising the following steps:
• selection of a neighbor base station (SBV) as a function of the quality measurements obtained,
• transmission of a configuration message (m08) destined for the cellular terminal comprising an identifier of the selected neighbor base station, the configuration message requesting the attachment of the cellular terminal to the selected neighbor base station, by a second link (L2), the attachment triggering the creation of the new connection between the cellular terminal and the anchor gateway through the selected neighbor base station, the new connection using the IP address and the second link, the first connection and the first link being maintained.

2. Delegation **method** according to Claim 1, furthermore comprising a step of transmitting a response message (m07) comprising an information item relating to the delegation of the establishment of the new connection (C2) to a neighbor base station.

3. Delegation **method** according to either of the preceding claims, furthermore comprising a step of receiving a response message (m15) originating from the cellular terminal (UE) confirming the establishment of the new connection (C2) through the selected neighbor base station (SBV).

4. Delegation **method** according to one of the preceding claims, where the decision step comprises a step of comparing a bitrate necessary for the new connection (C2) with a bitrate available through the local base station (SBL), the indication of necessary resources, which is included in the request for establishment (m06) of a new connection, comprising an information item relating to the necessary bitrate.

5. Delegation **method** according to one of the preceding claims, where the configuration message (m08) comprises the indication of necessary resources.

6. Delegation **method** according to one of the preceding claims, where the first link (L1) is a radio link emulated on a physical hookup between the cellular terminal (UE) and the local base station (SBL).

7. Delegation **method** according to the preceding claim, where the local base station (SBL) is connected to a broad-band fixed access network (BAN).

8. Delegation **method** according to the preceding claim, where the cellular terminal (UE) is able to connect to terminal devices (CPE1, CPE2, CPE3) forming a local access network, the devices of the local access network being able to exchange data packets with devices of the packet switching network (PSN), through the first link (L1) and through the second link (L2).

9. **Local base station** able to delegate a request to establish a new connection between a terminal adapted to connect to a cellular network, so-called cellular terminal, and a so-called anchor gateway comprising an interface with a packet switching network,
the cellular terminal being attached by a first link to the local base station,
a first connection being established between the cellular terminal and the anchor gateway, an IP address being allocated to the cellular terminal by the anchor gateway,
the first connection using the IP address and the first link,
the local base station comprising a receiver (140), a processor (130) and a transmitter (150):
• the receiver being able to obtain measurements of quality of a radio signal transmitted by at least one neighbor base station toward the cellular terminal,
• and able to receive a request to establish a new connection between the cellular terminal and the anchor gateway, generated by the anchor gateway and comprising an indication of necessary resources,
• the processor being able to decide not to establish the new connection through the apparatus, on the basis of the indication of necessary resources,
• and able to select a neighbor base station as a function of the quality measurements obtained,
• the transmitter being able to transmit a configuration message destined for the cellular terminal comprising an identifier of the selected neighbor base station, the configuration message requesting the attachment of the cellular terminal to the selected neighbor base station, by a second link, the attachment triggering the creation of the new connection between the cellular terminal and the anchor gateway through the selected neighbor base station, the new connection using the IP address and the second link, the first connection and the first link being maintained.

10. **Hybrid residential gateway** comprising a local base station according to Claim 9 and a cellular terminal adapted to connect to a cellular network and able to process a delegated request to establish a new connection (C2) between the cellular terminal (UE) and a so-called anchor gateway (PGW) comprising an interface with a packet switching network (PSN),
the cellular terminal being attached by a first link (L1) to a local base station (SBL),
a first connection (C1) being established between the cellular terminal and the anchor gateway, an IP address being allocated to the cellular terminal by the anchor gateway,
the first connection using the IP address and the first link,
the cellular terminal comprising a transmitter (240) and a receiver (250):
• the transmitter being able to transmit destined for the local base station measurements of quality (m01) of a radio signal transmitted by at least one neighbor base station toward the cellular terminal,
• the receiver being able to receive a configuration message (m08) comprising an identifier of one of the at least one neighbor base station, the configuration message requesting the attachment of the cellular terminal to the neighbor base station, by a second link (L2), the attachment triggering the creation of the new connection between the cellular terminal and the anchor gateway through the neighbor base station, the new connection using the IP address and the second link, the first connection and the first link being maintained,
• the transmitter being able to transmit destined for the local base station a response message (m15) comprising an information item relating to the establishment of the new connection through the neighbor base station, comprising the identifier of the base station,
the cellular terminal being attached to the local base station by a radioelectric link emulated on a physical hookup, the local base station being connected to a broad-band fixed access network.

11. **Hybrid residential gateway** according to Claim 10, where the cellular terminal is able to connect to terminal devices forming a local access network, the devices of the local access network being able to exchange data packets with devices of the packet switching network, through the first and second links.

12. **Hybrid residential gateway** according to either of Claims 10 and 11, where the local base station is of femtocell type.

13. **Computer program, characterized in that** it comprises instructions for the implementation of the steps of the delegation method according to Claim 1, when this method is executed by a processor of the local base station.
